(19) **Europäisches Patentamt**

**European Patent Office**

**Office européen des brevets**

(11) Veröffentlichungsnummer : **0 108 239**
**B1**

(12) # EUROPÄISCHE PATENTSCHRIFT

(45) Veröffentlichungstag der Patentschrift :
06.05.87

(51) Int. Cl.⁴ : **F 02 M 65/00**

(21) Anmeldenummer : **83109727.4**

(22) Anmeldetag : **29.09.83**

(54) Einrichtung zum Messen von Einspritzmengen.

(30) Priorität : **14.10.82 DE 3238107**
**22.01.83 DE 3302059**

(43) Veröffentlichungstag der Anmeldung :
**16.05.84 Patentblatt 84/20**

(45) Bekanntmachung des Hinweises auf die Patenterteilung : **06.05.87 Patentblatt 87/19**

(84) Benannte Vertragsstaaten :
**AT DE FR GB IT**

(56) Entgegenhaltungen :
**EP-A- 0 085 574**
**DE-A- 3 214 832**
**DE-B- 1 242 410**

(73) Patentinhaber : **ROBERT BOSCH GMBH**
**Postfach 50**
**D-7000 Stuttgart 1 (DE)**

(72) Erfinder : **Abt, Jürgen**
**Leimengrubenstrasse 18**
**D-7016 Gerlingen (DE)**
Erfinder : **Handtmann, Dieter, Dr. Dipl.-Phys.**
**Wilhelm-Haspel-Strasse 49**
**D-7032 Sindelfingen (DE)**
Erfinder : **Schwartz, Reinhard, Dipl.-Ing.**
**Rankestrasse 30**
**D-7000 Stuttgart 75 (DE)**
Erfinder : **Wocher, Berthold, Dr. Dipl.-Ing.**
**Längererstrasse 85**
**D-7250 Leonberg (DE)**

## Beschreibung

Die Erfindung geht aus von einer Einrichtung nach der Gattung des Hauptanspruchs. Bei dieser wird der Ausgang des Meßwertgebers an einen Amplitudenspeicher angeschlossen, wobei ein synchron mit der Drehzahl der Einspritzpumpe arbeitender Löschimpulsgeber vorgesehen ist, der jeweils kurz vor Beginn eines Förderhubes der Einspritzpumpe einen Löschimpuls derart erzeugt, daß der Ausgang desselben mit einem Löscheingang des Amplitudenspeichers verbunden ist. Der Ausgang des Amplitudenspeichers ist über ein Integrierglied (Tiefpaß) mit einem Anzeigegerät verbunden. Bei konstanter Fördermenge kann an einem geeichten Anzeigegerät sofort die Fördermenge der Einspritzpumpe abgelesen werden, ohne daß es irgendwelcher Umrechnungen bedarf. Die bewegliche Wand ist dabei durch einen Meßkolben gebildet, der in einer Zylinderbüchse des Gehäuses geführt ist. Eine derartige Einrichtung ist verhältnismäßig aufwendig, da Meßkolben, Einlaßkolben, Anordnung der Einspritzdüse und anderes mehr einen verhältnismäßig hohen mechanischen Fertigungsaufwand notwendig machen. Auch der Aufwand an elektronischen Geräten ist erheblich (DE-B-12 42 410).

Weiterhin ist eine Flüssigkeits-Einspritz-Steuereinrichtung bekanntgeworden, welche Dichtabschnitte für das Abdichten und Verschließen einer mit Brennstoff zu speisenden Einspritzkammer bzw. einer Brennstoff-Ablauföffnung sowie ein Steuerventil aufweist, welches letztere Abschnitte besitzt, die Bestandteile der beiden Dichtabschnitte bilden. Das Steuerventil bewegt sich von der Einspritzkammer weg, um die beiden Dichtabschnitte aufzusteuern bzw. zu entlasten und dadurch die Flüssigkeit auszustoßen. Nach Beendigung des Ablaufvorgangs kehrt das Steuerventil in seine Ausgangsstellung (zur Einspritzkammer hin) zurück, während es die Flüssigkeits-Ablauföffnung abdichtend verschließt, um dadurch den Druck in der Einspritzkammer anzuheben. Eine derartige Steuereinrichtung hat den Nachteil, daß mit ihr jeweils nur eine Prüfeinrichtung bedient werden kann, was häufig nicht ausreicht (DE-A-3 214 832, veröffentlicht am 11.11.82).

Es ist außerdem noch ein Meßgerät zur Messung der Einspritzmenge einer Brennkraftmaschine bekanntgeworden mit einem Einspritzblock, der einige Ausnehmungen aufweist, in welche die Einspritzdüsen der Einspritzpumpe hineinragen. Zur Feststellung von Änderungen des Einspritzdruckes sind Drucksensoren vorgesehen, die ebenfalls mit den Ausnehmungen in Verbindung stehen. Die Drucksensoren erzeugen elektrische Signale für die Korrektur des Einspritzdrucks. Hierfür ist ebenfalls eine elektronisch arbeitende Signalverarbeitung notwendig. (EP-A-00 85 574, veröffentlicht am 10.8.83).

Es ist die Aufgabe der Erfindung, für eine beliebige Anzahl zu prüfender Einspritzkanäle nur eine Meßvorrichtung mit einem Vorschaltgerät vorzusehen, in dem das Verhältnis der Einzelhubfördermengen zueinander und in einem nachgeschalteten kontinuierlichen Durchflußgerät der Mittelwert über alle Ausläße der Einspritzpumpe bestimmt wird. Das hat den Vorteil, daß man auf diese Weise eine sehr preiswert und genau arbeitende Einrichtung zum Messen und Prüfen der Einspritzmengen von Einspritzpumpen erhält. Mit derselben Einrichtung läßt sich auch der Spritzbeginn und das Spritzende einer Einspritzung messen.

### Zeichnung

Die Zeichnung zeigt in Figur 1 eine Einrichtung zum Messen von Einspritzmengen in im wesentlichen schematischer Darstellung, die Figuren 2 und 3 zeigen Diagramme.

### Beschreibung der Ausführungsbeispiele

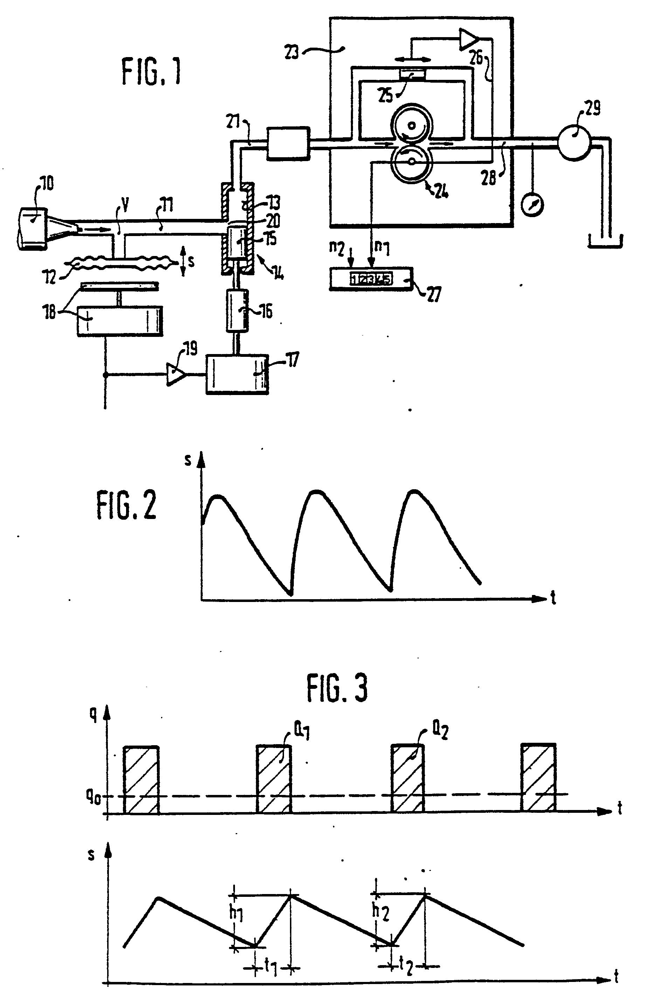

In Figur 1 ist mit 10 eine Einspritzdüse bezeichnet — es können auch mehrere sein — die an ein Volumen V angeschlossen ist. Dieses besteht im wesentlichen aus einer Rohrleitung 11 und einer an diese angeschlossene Wellmembrandose 12. Die Rohrleitung 11 mündet in eine Bohrung 13 eines Drosselventils 14, in der ein Drosselkolben 15 geführt ist, an dessen aus der Bohrung 13 ragendem Ende eine Spindel 16 angeordnet ist. Diese wird von einem elektrischen Regelmotor 17 angetrieben, der von einem Wegsensor 18 über einen elektrischen Verstärker 19 angesteuert wird. Der Wegsensor 18 steht mit der Wellmembrandose 12 in berührungsloser Wirkverbindung.

Der Drosselkolben 15 steuert einen Schlitz 20 an der den Drosselkolben 15 aufnehmenden Bohrung 13, die über eine Bohrung 21 mit einem nachgeschalteten kontinuierlichen Durchflußmeßgerät 23 in Verbindung steht. Dieses besteht im wesentlichen aus einer Zahnradpumpe 24 und einem parallelgeschalteten Kolben 25, der vom Differenzdruck am Eingang und Ausgang der Pumpe beaufschlagt ist. Seine Abweichungen aus einer Mittellage werden zur Drehzahlregelung der Zahnradpumpe 24 über einen elektrischen Regelkreis 26 einem diese antreibenden elektrischen Regelmotor signalisiert. An der Zahnradpumpe 24 fließt der Volumenstrom ab, der ihr über die Meßeinrichtung zugeleitet wird. Am Ende der Auslaßleitung 28 der Zahnradpumpe ist ein Druckregler 29 angeordnet, der etwa einen Druck von 2 bar aufrechterhält. Die Drehzahl $n_1$ der Zahnradpumpe 24 ist proportional zu dem Volumenstrom und wird als frequenzanaloges Signal auf den Eingang 1 des frequenzverhältniszählers 27 gegeben. Auf den zweiten Eingang des Zählers 27 wird das frequenzanaloge Signal $n_2$ der Drehzahl der Einspritzpumpe gegeben. Der Anzeigewert $n_1/n_2$ des Zählers ist dann proportional den über alle Auslässe gemittelten Einzelhubfördermengen der Einspritzpumpe. Die von der oder den Einspritzdüsen 10 abgespritzte Fördermenge der Einspritzpumpe spritzt in das kleingehaltene, gasblasenfreie Flüssigkeitsvolumen V, welches — wie oben beschrieben — im wesentlichen durch die Wellmembrandose 12 gebildet ist.

Der Wegsensor 18, der die Auslenkung der Wellmembrandose abnimmt, steuert den Drosselkolben 15 derart, daß der mittlere Druck $p_1$ des Volumens V z. B. 3 bar beträgt. Der Regelkreis für die Querschnittssteuerung der Drossel (14) zeigt Tiefpaßverhalten und ist so ausgelegt, daß die Einstellung des Drosselventils bei konstanter mittlerer Fördermenge auch bei veränderlichem Druck $p_1$ in einem gewissen Bereich $p_1 \pm \Delta p$ feststeht und keine Regelbewegung macht. Bei dieser Einstellung liefert der Wegsensor 18 einen Signalverlauf S(t) entsprechend Figur 2, die unterhalb dem Wegsensor dargestellt ist und bei der die Amplitude ein Maß für die Menge pro Hub der einzelnen Einspritzungen darstellt. Auf der Abszisse ist die Zeit aufgetragen. Der Druck $p_2$ hinter dem Drosselventil 14 beträgt etwa 2 bar. Der Regelkreis für die Querschnittssteuerung der Drossel (14) kann auch als Zweipunktregler mit Hysterese ausgelegt sein.

Unter der Voraussetzung, daß die einzelnen Fördermengenimpulse etwa denselben Verlauf haben, läßt sich das Verhältnis der Fördermenge von Hub zu näherungsweise darstellen als

$$Q_1/Q_2 = h_1/h_2$$

darin bedeuten nach Figur 3 :

$Q_n$ = Fördermenge im Hub n
$h_n$ = Amplitude des Wegsignals s(t)
$t_n$ = Länge der Einzeleinspritzung

Es ist außerdem ($p_1$ = konstantgesetzt) :

$$ds/dt \sim q(t) - q_0$$

q(t) = Fördermengenverlauf während der Einspritzung
$q_0$ = konstante kontinuierliche Fördermenge, welche durch die Drossel ausfließt.

Man kann also entsprechend Figur 3 aus dem Signalverlauf s(t) den Förderbeginn, das Förderende und über die Größen $h_n$ das Verhältnis der Einzelhubfördermengen ermitteln. Es ist ersichtlich, daß die Messung umso genauer wird, je steiler Anstiegs- und Abfallsflanke des Fördermengenimpulses sind.

## Patentansprüche

1. Einrichtung zur Messung der Spritzmenge, des Spritzbeginns und des Spritzendes der einzelnen Einspritzungen einer intermittierend arbeitenden Einspritzpumpe, die aus einer Einspritzkammer (V) besteht, die durch eine verstellbare, einen Drosselkolben (15) aufweisende Drossel (14) abschließbar ist und an einer anderen Stelle durch eine bewegliche Wand (12) mit Gegenkraft begrenzt wird, wobei die Stellung (s) der beweglichen Wand durch einen Wegsensor (18) abgenommen wird, der ein Signal für das Verstellen der Drossel (14) liefert, dadurch gekennzeichnet, daß die bewegliche Wand (12) als Wellmembrandose ausgebildet ist, deren Auslenkung (s) als elektrisches Signal einem elektrischen Regelmotor zugeleitet wird, der eine mit dem Drosselkolben (15) verbundene Gewindespindel (16) antreibt, und daß der Einspritzkammer (V) ein kontinuierlich messendes Fördermengenmeßgerät (23) nachgeschaltet ist.

2. Einrichtung nach Anspruch 1, dadurch gekennzeichnet, daß der Querschnitt (20) der Drossel (14) durch einen mechanisch-hydraulischen Druckregler (29), der sich auf den Druck in der Einspritzkammer bezieht, geregelt wird.

3. Einrichtung nach Anspruch 1 oder 2, dadurch gekennzeichnet, daß der Regelkreis für die Querschnittssteuerung der Drossel (14) Tiefpaßverhalten zeigt oder als Zweipunktregler mit Hysterese ausgelegt ist.

## Claims

1. Device for measuring the injection rate, start of injection and end of injection of the individual injections of an intermittently operating injection pump consisting of an injection chamber (V) which can be closed off by means of an adjustable throttle (14) having a throttle piston (15) and which at another location is limited by a movable wall (12) with counterforce, the position (s) of the movable wall being detected by a displacement sensor (18) which supplies a signal for the adjustment of the throttle (14), characterized in that the movable wall (12) is designed as a corrugated diaphragm capsule, the deflection (s) of which is delivered as an electrical signal to a variable-speed electric motor which drives a threaded spindle (16) connected to the throttle piston (15), and in that the injection chamber (V) is followed by a continuously measuring feed-rate meter (23).

2. Device according to Claim 1, characterized in that the cross-section (20) of the throttle (14) is regulated by a mechanical/hydraulic pressure regulator (29) which is linked to the pressure in the injection chamber.

3. Device according to Claim 1 or 2, characterized in that the regulating circuit for controlling the cross-section of the throttle (14) has a lowpass behaviour or is designed as a two-position controller with hysteresis.

## Revendications

1. Dispositif pour mesurer des quantités injectées, le début d'injection et la fin d'injection des différentes courses d'injection d'une pompe à injection travaillant de façon intermittente, dispositif constitué d'une chambre d'injection (V) qu'un étranglement réglable (14) présentant un piston d'étranglement (15) peut obturer et qui est limitée, à un autre endroit, par une paroi mobile (12) avec force antagoniste, étant précisé que la position (s) de la paroi mobile est saisie par un détecteur de déviation (18) qui fournit un signal pour le réglage de l'étranglement (14), caractérisé en ce que la paroi mobile (12) est conçue sous forme de boîte à membrane ondulée dont la déviation (s) est envoyée, sous forme de signal électrique, à un moteur électrique de régulation qui entraîne une broche filetée (16) reliée au piston d'étranglement (15) ; et en ce qu'en aval de la chambre d'injection (V) est monté un appareil de mesure du débit (23) qui mesure en continu.

2. Dispositif selon la revendication 1, caractérisé en ce que la section (20) de l'étranglement (14) est régulée par un régulateur mécano-hydraulique de pression (29) qui se réfère à la pression qui règne dans la chambre d'injection.

3. Dispositif selon la revendication 1 ou 2, caractérisé en ce que le circuit de régulation pour la commande de la section de l'étranglement (14) montre l'allure d'un filtre passe-bas ou est conçu sous forme de régulateur à deux positions avec hystérésis.

FIG. 1

FIG. 2

FIG. 3